# EUROPÄISCHE PATENTANMELDUNG

(11) **EP 4 744 821 A1**
(43) Veröffentlichungstag der Anmeldung: **20.05.2026**
(21) Anmeldenummer: 25202123.3
(22) Anmeldetag: 15.09.2025
(51) Int. Cl.: B23Q 1/00, B23Q 1/52, B23Q 11/08

(54) **HANDARBEITSSTATION**

(30) Priorität: 19.11.2024 DE 102024133839
(71) Anmelder: Liebherr-Verzahntechnik GmbH, 87437 Kempten (DE)
(72) Erfinder: Hößle, Florian, 87437 Kempten (DE); Pollmann, Jan, 87437 Kempten (DE); Bechteler, Konrad, 87437 Kempten (DE); Rauh, Christoph, 87437 Kempten (DE); Bitter, Fabian, 87437 Kempten (DE)
(74) Vertreter: Lorenz Seidler Gossel Part. mbB

(57) **Zusammenfassung**

Die vorliegende Erfindung umfasst einen Handarbeitsstation für Werkstücke, mit einem Handarbeitsplatz, einem mittels einer Drehachse drehbaren Drehtisch, welcher am Handarbeitsplatz angeordnet ist, wobei die Drehachse einen Antrieb aufweist, einer Steuerung zur Ansteuerung des Antriebs der Drehachse, und Bedienelementen zur Bedienung des Handarbeitsplatzes. Dabei ist vorgesehen, dass die Bedienelemente eine erste und eine zweite Bedienanordnung umfassen, welche ortsfest und getrennt voneinander an der Handarbeitsstation angeordnet sind, wobei die Drehachse durch ein Betätigen der ersten Bedienanordnung in eine erste Drehrichtung und durch Betätigen der zweiten Bedienanordnung in eine zweite, entgegengesetzte Drehrichtung gedreht wird.

## Beschreibung

Die vorliegende Erfindung betrifft eine für Werkstücke, mit einem Handarbeitsplatz und einem mittels einer Drehachse drehbaren Drehtisch, welcher am Handarbeitsplatz angeordnet ist, wobei die Drehachse einen Antrieb aufweist.

Insbesondere kann es sich bei er Handarbeitsstation um eine Ladestation zur Übergabe von Werkstücken an ein Maschinen- und/oder Automationssystem, insbesondere an ein Bearbeitungs-, Transport- und/oder Lagerungssystem, handeln.

Eine solche Ladestation ist beispielsweise auf der DE 20 2007 016 725 U1 bekannt und weist üblicherweise einen Ladeplatz zur Übergabe der Werkstücke von einer Ladeseite zu einer Maschinenseite, welcher in einer Sicherheitsumzäunung des Maschinensystems anordenbar ist, auf.

Solche Lade- bzw. Rüstplätze dienen dazu, Werkstücke auf Paletten oder Werkstückträgern zu montieren um sie dann anschließend in den Sicherheitsbereich des Maschinen- und/oder Automationssystems, bspw. einer Werkzeugmaschine, einer Roboterzelle, einer Automationszelle oder eines Palettenhandlingsystems einzuschleusen. Damit am Rüstplatz gefahrlos gearbeitet werden kann und auch sicher gestellt ist, dass beim Werkstückwechsel niemand in den Arbeitsbereich der Werkzeugmaschine oder des Palettenhandlingsystems gelangen kann, ist der Rüstplatz üblicherweise über ein Türsystem abgesichert, das erst durch Schließen der ladeseitigen Tür um den Rüstplatz den Zugang in den maschinenseitigen Arbeitsbereich freigibt.

Um die Werkstücke beim Rüsten von allen Seiten gut zu erreichen, ist am Rüstplatz häufig ein Drehtisch mit einer Aufnahme für die Palette oder den Werkstückträger angeordnet. Bei leichten Werkstücken und Werkstückaufnahmen kann der Werker beim Rüsten die Palette oder die Werkstückaufnahme manuell drehen, um möglichst leicht an alle Seiten des Werkstücks zu kommen. Das Drehen dient insbesondere dazu, um das Werkstück auf der Palette oder der Werkstückaufnahme zu montieren, Messaufgaben wahrzunehmen oder vor dem Abspannen zu reinigen.

Bei sehr schweren Werkstücken muss das Drehen motorisch unterstützt erfolgen, da der Kraftaufwand, das Werkstück zu drehen, für den Werker zu groß wäre. Dieser motorische Antrieb erfordert aber die Einhaltung gewisser Sicherheitsanforderungen, damit der Werker nicht zwischen Werkstück/Palette und der Einhausung des Rüstplatzes eingeklemmt werden kann, wenn der Drehtisch mittels Antriebsmotor gedreht wird. Gleichzeitig soll der Werker aber möglichst gut an alle Seiten des Werkstücks kommen und muss erforderlichenfalls beim Drehen auch direkt am Werkstück Messaufgaben wie beispielsweise eine Rundlaufprüfung wahrnehmen können. Die bewegten Massen von Werkstück, Tisch und Maschinenplatte können dabei sehr groß werden. Daher gilt es, bestimmte Sicherheitskriterien zum Betrieb dieses Rüstplatzes einzuhalten, damit der Werker bei seiner Arbeit nicht gefährdet wird.

Damit der Tisch im Rüstplatz gemäß den aktuell gültigen Sicherheitsbestimmungen hinsichtlich gefahrbringender Bewegungen entspricht, gilt es die entsprechenden Normen (meist DIN oder DIN EN ISO) zu erfüllen. So sind gewisse Mindestabstände geregelt, um Quetschstellen zu vermeiden. Mittels Zweihandbedienung kann verhindert werden, dass der Werker seine Gliedmaßen in Gefahr bringt. Gleichzeitig muss aber sichergestellt werden, dass er seine Rüst- und Messaufgaben erfüllen kann. Daraus ergeben sich teils widersprüchliche Anforderungen, die im Rahmen einer Risikobeurteilung betrachtet und berücksichtigt werden müssen.

Im Stand der Technik gibt es eine Vielzahl an Lösungen, um die Sicherheitsanforderungen gemäß Risikobeurteilung zu erfüllen. Beispielsweise können Kontaktleisten an der Rüstplatzeinhausung eine mögliche Quetschung rechtzeitig erkennen und setzen die gefahrbringende Bewegung still. Lichtschranken, Scanner oder Kameras erkennen die Bewegung des Werkers in Bereichen, in denen Gefahren auftreten können, und setzen ebenfalls die Anlage still. Zusätzlich dürfen bestimmte Abstandmaße nicht unterschritten werden, um gefährliche Quetsch- und Scherstellen zu verhindern.

Solche Sicherheitselemente sind beispielsweise aus JP 2014 213431 A, EP 2 14 5724 A2 und EP 1 306 603 A1 bekannt.

Sollte es dennoch zur Gefahr einer Quetschung z.B. zwischen Werkstück und Umhausung des Rüstplatzes kommen, wäre eine sofortige Stillsetzung der Drehbewegung des Tisches ideal, wenn die Betätigungstaste der Steuerung losgelassen wird bzw. wenn eine Kollision zwischen dem Werker und der Einhausung des Rüstplatzes erkannt wird. Auf Grund der hohen Massenträgheiten bei großen und schweren Werkstücken sind hohe negative Beschleunigungswerte notwendig, damit die Drehbewegung innerhalb weniger mm gestoppt werden kann, was den Antrieb für den Rüstplatztisch sehr aufwändig machen würde und mit hohen Kosten verbunden wäre.

Ähnliche Probleme bestehen auch ganz allgemein bei Handarbeitsplätzen mit einem Drehtisch.

Aufgabe der vorliegenden Erfindung ist es daher, eine verbesserte Handarbeitsstation zur Verfügung zu stellen. Diese Aufgabe wird durch eine Handarbeitsstation gemäß Anspruch 1 gelöst. Bevorzugte Ausgestaltungen der vorliegenden Erfindung sind Gegenstand der Unteransprüche.

Die vorliegende Erfindung umfasst eine Handarbeitsstation für Werkstücke mit einem Handarbeitsplatz, einem mittels einer Drehachse drehbaren Drehtisch, welcher am Handarbeitsplatz angeordnet ist, wobei die Drehachse einen Antrieb aufweist, einer Steuerung zur Ansteuerung des Antriebs der Drehachse, und Bedienelementen zur Bedienung des Handarbeitsplatzes. Die Erfindung ist dadurch gekennzeichnet, dass die Bedienelemente eine erste und eine zweite Bedienanordnung umfassen, welche ortsfest und getrennt voneinander an der Handarbeitsstation angeordnet sind, wobei die Drehachse durch ein Betätigen der ersten Bedienanordnung in eine erste Drehrichtung und durch Betätigen der zweiten Bedienanordnung in eine zweite, entgegengesetzte Drehrichtung gedreht wird. Die Erfinder haben erkannt, dass durch die Verwendung zweier separater Bedienanordnungen und einer von der jeweiligen Bedienanordnung abhängigen Drehrichtung die Bediensicherheit erheblich erhöht werden kann.

Gemäß einer möglichen Ausgestaltung der vorliegenden Erfindung ist die erste Bedienanordnung auf einer ersten Seite des Handarbeitsplatzes und die zweite Bedienanordnung auf einer zweiten Seite des Handarbeitsplatzes angeordnet. Hierdurch wird sichergestellt, dass die Bedienanordnungen ausreichend weit voneinander angeordnet sind. Insbesondere ist hierbei der Handarbeitsplatz und/oder die Drehachse zwischen den beiden Bedienanordnungen angeordnet.

Gemäß einer möglichen Ausgestaltung der vorliegenden Erfindung ist die erste Bedienanordnung auf der linken Seite des Handarbeitsplatzes und die zweite Bedienanordnung auf der rechten Seite des Handarbeitsplatzes angeordnet, wobei die Drehachse durch ein Betätigen der ersten Bedienanordnung gegen den Uhrzeigersinn und durch Betätigen der zweiten Bedienanordnung im Uhrzeigersinn gedreht wird. Hierdurch wird der Drehtisch auf der Seite, auf welcher sich die jeweilige Bedienanordnung und damit der Bediener beim Bedienen der jeweiligen Bedienanordnung angeordnet ist, auf den Bediener zu und/oder von einer Maschinenseite zu einer Bedienseite hin bewegt, so dass verhindert wird, dass Körperteile des Bedieners in den Handarbeitsplatz hineingezogen und/oder im Bereich des Handarbeitsplatz gequetscht werden.

Gemäß einer möglichen Ausgestaltung der vorliegenden Erfindung kann über die erste Bedienanordnung keine Drehbewegung in die zweite Drehrichtung und über die zweite Bedienanordnung keine Drehbewegung in die erste Drehrichtung ausgelöst werden. Dies erhöht die Sicherheit zusätzlich.

Gemäß einer möglichen Ausgestaltung der vorliegenden Erfindung umfasst die Handarbeitsstation eine Einhausung für den Handarbeitsplatz. Bevorzugt ist diese zumindest auf einer der Bedienseite abgewandten Seite des Handarbeitsplatzes angeordnet und umgibt den Handarbeitsplatz auf dieser Seite.

Gemäß einer möglichen Ausgestaltung der vorliegenden Erfindung handelt es sich bei der Handarbeitsstation um eine Ladestation zur Übergabe von Werkstücken an ein Maschinen- und/oder Automationssystem, insbesondere an ein Bearbeitungs-, Transport- und/oder Lagerungssystem.

Gemäß einer möglichen Ausgestaltung der vorliegenden Erfindung handelt es sich bei dem Handarbeitsplatz um einen Ladeplatz zur Übergabe der Werkstücke von einer Ladeseite zu einer Maschinenseite des Ladeplatzes. Die Ladeseite ist in diesem Fall die Bedienseite des Handarbeits- bzw. Ladeplatzes.

Gemäß einer möglichen Ausgestaltung der vorliegenden Erfindung weist die Handarbeitsstation ein Türsystem zur wahlweisen Abtrennung des Ladeplatzes von der Ladeseite und der Maschinenseite auf. Bevorzugt ist das Türsystem so ausgeführt, dass sich die Maschinenseite erst öffnet, wenn die Ladeseite geschlossen ist und umgekehrt. Insbesondere kann das Türsystem einen Teil der Einhausung des Handarbeitsplatzes sein.

Gemäß einer möglichen Ausgestaltung der vorliegenden Erfindung ist die erste Bedienanordnung und die zweite Bedienanordnung jedenfalls teilweise in links und rechts des Handarbeitsplatzes und/oder Türsystems angeordneten Einhausungselementen der Handarbeitsstation angeordnet. Insbesondere handelt es sich hierbei um stationäre Einhausungselemente der Handarbeitsstation. Insbesondere ist hierbei mindestens ein Bedienelement der jeweiligen Bedienanordnung in einem links bzw. rechts des Handarbeitsplatzes und/oder Türsystems angeordneten Einhausungselement der Handarbeitsstation angeordnet. Ein weiteres Bedienelement kann als Fuß-Taster oder Fuß-Schalter ausgeführt sein, und im Bodenbereich angeordnet sein.

Die Einhausungselemente der Handarbeitsstation können in eine Sicherheitsumzäunung des Maschinen- und/oder Automationssystems integriert werden. Die Anordnung in den Einhausungselementen der Handarbeitsstation stellt sicher, dass der Bediener beim Bedienen der jeweiligen Bedienanordnung auch tatsächlich auf der Seite steht, auf welcher die Bedienanordnung angeordnet ist.

Gemäß einer möglichen Ausgestaltung der vorliegenden Erfindung weisen die erste und die zweite Bedienanordnung jeweils eine Zustimmeinrichtung und eine Richtungssteuerung oder eine Zweihandsteuerung für die Ansteuerung der Drehbewegung der Drehachse auf. Hierdurch wird die Sicherheit weiter erhöht. Insbesondere kann die Richtungssteuerung hierbei nur betätigt werden, wenn die Zustimmeinrichtung ebenfalls betätigt wird. Durch die Richtungssteuerung kann die Ausrichtung des Drehtisches eingestellt werden. Diese umfasst beispielsweise einen Drehknopf, dessen Ausrichtung der Drehtisch folgt, oder einen Hand- oder Fuß-Taster, über welchen eine Drehbewegung ausgelöst wird. Wie oben beschrieben ist jedoch nur eine Drehbewegung in die erfindungsgemäß vorgesehene Richtung möglich bzw. vorgebbar. Insbesondere ist die Richtungssteuerung durch einen Hand- oder Fuß-Taster oder einen Hand- oder Fuß-Schalter ausgeführt, wobei insbesondere eine hand-betätigte Zustimmeinrichtung und ein Fuß-Taster als Richtungssteuerung vorgesehen sind.

Gemäß einer alternativen Ausgestaltung kann jedoch auch jeweils nur eine Richtungssteuerung vorgesehen sein, insbesondere in Form eines Hand-Schalters oder Hand-Tasters, ohne dass eine Zustimmeinrichtung eingesetzt würde.

Gemäß einer möglichen Ausgestaltung der vorliegenden Erfindung handelt es sich bei dem Handarbeitsplatz um einen Rüstplatz, wobei auf dem Drehtisch bevorzugt eines oder mehrere Werkstücke auf einem oder mehreren Werkstückträgern und/oder Paletten anordenbar sind. Insbesondere weist der Drehtisch daher eine Aufnahme auf, an welcher einer oder mehrere Werkstückträgern und/oder Paletten anordenbar sind.

Bei dem Antrieb der Drehachse kann es sich um einen pneumatischen, hydraulischen und/oder elektrischen Antrieb handeln.

Die Drehachse ist bevorzugt vertikal ausgerichtet und dreht den Drehtisch um eine vertikale Rotationsachse.

Bei der Drehachse kann es sich jedoch auch um jede andere Drehachse handeln. Insbesondere kann es sich bei der Drehachse auch um eine Schwenkachse handeln.

Die vorliegende Erfindung umfasst weiterhin eine Sicherheitsumzäunung mit einer Handarbeitsstation, wie sie oben beschrieben wurde. Insbesondere ist die Handarbeitsstation hierbei in die Sicherheitsumzäunung integriert.

Die vorliegende Erfindung umfasst weiterhin ein Maschinensystem mit einer Sicherheitsumzäunung und/oder einer Handarbeitsstation, wie sie oben beschrieben wurden.

Bei dem Maschinen- und/oder Automationssystem kann es sich insbesondere um eine Werkzeugmaschine, und/oder eine Roboterzelle und/oder eine Automationszelle und/oder ein Palettenhandlingsystem handeln.

Bevorzugt sind das Maschinensystem, die Sicherheitsumzäunung und/oder die Handarbeitsstation so ausgestaltet, wie dies bereits oben beschrieben wurde.

Die vorliegende Erfindung wird nun anhand eines Ausführungsbeispiels und einer Zeichnung näher beschrieben.

Hierbei zeigt:

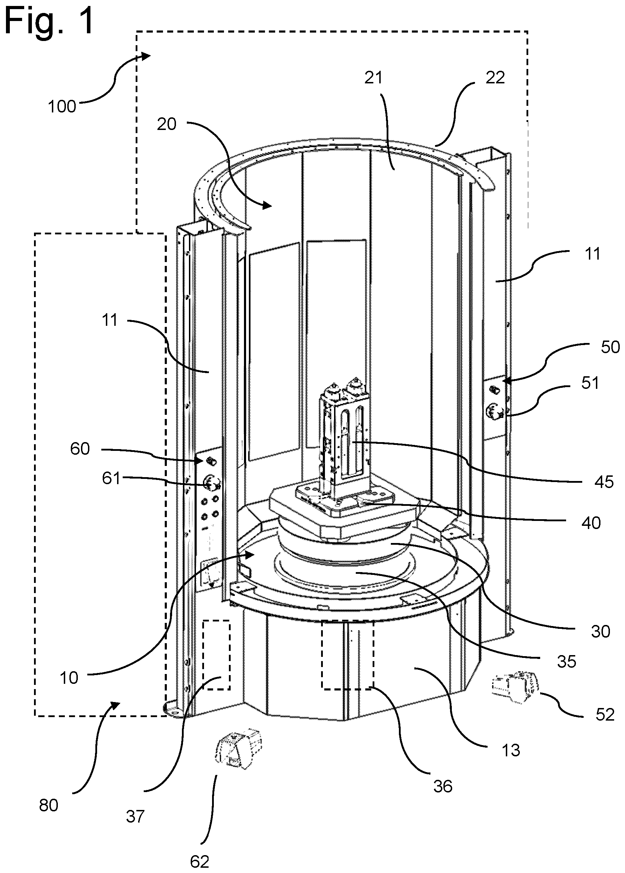

- Fig. 1: ein Ausführungsbeispiel einer erfindungsgemäßen Handarbeitsstation.

Die im Ausführungsbeispiel gezeigte Handarbeitsstation weist einen Handarbeitsplatz 10, insbesondere einen Lade- und/oder Rüstplatz auf, an welchem ein mittels einer vertikalen Drehachse 35 drehbarer Drehtisch 30 vorgesehen ist.

Der Drehtisch 30 weist eine Aufnahme für einen Werkstückträger 40 und/oder eine Palette auf, an welcher ein Werkstück 45 angeordnet ist.

Die Drehachse wird über einen schematisch dargestellten Antrieb 36 betätigt, welcher über eine Steuerung 37 angesteuert ist. Die Steuerung 37 steht mit Bedienelementen 50, 60 in Verbindung und wird über diese bedient.

Der Handarbeitsplatz weist im Ausführungsbeispiel eine Einhausung bzw. Verkleidung 20 auf, welche diesen zumindest auf der der Bedienseite abgewandten Seite umgibt.

Erfindungsgemäß besteht die Idee nun darin, dass es erst gar nicht zu einer gefahrbringenden Bewegung kommt, indem die Drehrichtung des Drehtisches 30 je nach Standplatz des Werkers so ausgeführt wird, dass es zu keiner Einzugs- und/oder Quetschgefahr zwischen Werkstück, Palette und Handarbeitsplatzverkleidung kommen kann.

Die Tischdrehung wird je nach seiner Standposition am Handarbeitsplatz immer nur im Uhrzeigersinn oder entgegen dem Uhrzeigersinn ausgelöst. Das Werkstück kann sich dann nur so drehen, dass es auf der Seite des Handarbeitsplatzes, auf welcher die Bedienperson steht, nicht zu einer Einzugsgefahr zwischen Werkstück und Rüstplatzeinhausung kommen kann. Das Werkstück dreht sich demgemäß immer von einer möglichen Einquetschstelle weg.

Damit ist auch bei großen und schweren Werkstücken sichergestellt, dass der Anhalteweg der Werkstückdrehung ausreichend gering ist, ohne dass die Bremsanlage bzw. der Antriebsstrang zu groß und damit zu teuer dimensioniert werden muss. Erzielt wird dies indem zwei separate Bedieneinheiten 60, 50 jeweils links und rechts vom Handarbeitsplatz 10 in die Verkleidung 11 integriert werden und anhand der Position der Bedieneinheit 60, 50 die Drehrichtung für den Tisch 40 vorgegeben ist.

Die Kosten für die zwei separaten Bedieneinheiten 60, 50 liegen deutlich unter einer aufwändigen Bremsanlage bzw. einem aufwändigen Antriebsstrang ggf. gekoppelt mit Kontaktleisten oder Lichtschranken, wie sie häufig nach dem Stand der Technik verbaut werden. Natürlich kann die vorliegende Erfindung jedoch zur weiteren Erhöhung der Sicherheit auch mit solchen weiteren Sicherheitselementen wie Kontaktleisten oder Lichtschranken kombiniert werden.

Das Bedienkonzept, welches nicht nur für einen Rüstplatz, wie er oben beschrieben wurde, sondern ganz allgemein für jeden Handarbeitsplatz mit einer Drehachse einsetzbar ist, kann daher zusammenfassend wie folgt beschrieben werden:

Es sind zwei Bedienstellen 50, 60 vorgesehen, die ortsfest und getrennt voneinander an dem Handarbeitsplatz angeordnet sind. Je Bedienstelle 50, 60 kann die Drehachse nur in einer Drehrichtung bewegt werden.

Jede Bedienstelle besitzt im Ausführungsbeispiel eine Zustimmeinrichtung 51, 61 und eine Richtungssteuerung 52, 62. Im Ausführungsbeispiel erfolgt die Richtungssteuerung hierbei durch die Fußtaster 52, 62, somit bleibt eine Hand frei für z.B. Messarbeiten. Die Zustimmeinrichtung 51,61 ist jeweils ein handbetätigter Taster, welcher in den rechts und links des Handarbeitsplatzes angeordneten Einhausungselementen 11 angebracht sind. Neben den Zustimmeinrichtungen 51,61sind dort weiterhin Not-Aus-Schalter vorgesehen.

Alternativ kann die Betätigung der Drehachse auch über jeweils eine rechts und links des Handarbeitsplatzes in dem Einhausungselement 11 angebrachte Zweihandsteuerung für die Ansteuerung der Drehachse erfolgen.

Alternativ kann die Richtungssteuerung auch über Hand-Taster an den Bedienstellen erfolgen, ohne dass hierfür eine Zustimmeinrichtung vorgesehen wäre.

Die Bedienelemente für die Zustimmeinrichtung und Richtungssteuerung, oder die Bedienelemente der Zweihandsteuerung, oder die Hand-Taster sind ortsfest gebunden.

Die Bedienelemente der beiden Bedienstellen sind räumlich getrennt voneinander angeordnet. Insbesondere erfolgt die Anordnung so, dass eine Bedienperson, welche die eine Bedienstelle betätigt, aus der hierfür eingenommenen Position heraus die andere Bedienstelle nicht erreicht.

Bei einer Handarbeitsstation, wie sie bspw. in Fig. 1 dargestellt ist, bei welcher die Drehachse vertikal verläuft und die beiden Bedienstellen bzw. Bedienanordnungen 50, 60 rechts und links des Handarbeitsplatzes 10 angeordnet sind, kann die Ansteuerung wie folgt erfolgen:
Bedienstelle 60 (links angeordnet): Durch Betätigung der Zustimmeinrichtung 61 und Richtungssteuerung 62 oder durch Betätigung der Zweihandsteuerung dreht sich die Drehachse 35 ausschließlich im Gegenuhrzeigersinn.

Bedienstelle 50 (rechts angeordnet): Durch Betätigung der Zustimmeinrichtung 51 und Richtungssteuerung 52 oder durch Betätigung der Zweihanddsteuerung dreht sich die Drehachse 35 ausschließlich im Uhrzeigersinn.

Der Vorteil des neuen Bedienkonzepts liegt darin, dass durch die Begrenzung der Drehrichtung die Wahrscheinlichkeit des Quetschens, Scherens sowie des Erfassens (Hineinziehens) des Bedieners reduziert wird.

Dies ist vor allem bei Prozessen, bei denen sich der Bediener in unmittelbarer Nähe zur Drehachse befinden muss (z. B. zur Reinigung des Werkstücks oder zur Durchführung von Messungen) der Fall. Die Sicherheit für den Bediener wird daher erhöht.

Die Erfindung bezieht sich hierbei allgemein auf Handarbeitsplätze mit kraftbetriebener Dreh- bzw. Schwenkachsen (elektrisch, hydraulisch oder pneumatisch). Insbesondere kann sie bei einen Rüstplatz für Werkzeugmaschinen und Automationssysteme zum Einsatz kommen. Sie schützt eine Bedienperson insbesondere dann, wenn trennende Schutzeinrichtungen offen oder nichttrennende Schutzeinrichtungen außer Kraft gesetzt sind.

Wie in Fig. 1 ersichtlich kann der Handarbeitsplatz 10 auf einem Podest 13 angeordnet sein. In diesem kann auch der Antrieb 35 für die Drehachse 35 angeordnet sein.

Weiterhin sind rechts und links des Handarbeitsplatzes 10 stationäre Einhausungselemente 11 vorgesehen, mit welchen der Handarbeitsplatz bevorzugt in eine Sicherheitsumzäunung 80 integriert werden kann.

Die Einhausung 20 kann ein Türsystem aufweisen, welches in der in Fig. 1 dargestellten Stellung den Handarbeitsplatz auf seiner rückwärtigen Maschinenseite verschließt. In einer nicht dargestellten zweiten Stellung kann das Türsystem die Bedien- bzw. Ladeseite verschließen, so dass die Maschinenseite geöffnet werden kann. Das Werkstück kann dann durch eine Automation von der Maschinenseite her von dem Handhabungsplatz entnommen werden.

Die Handarbeitsstation kann hierbei als Ladestation für ein Maschinen- und/oder Automationssystem 100 eingesetzt werden, welches von einer Sicherheitsumzäunung 80 umgeben ist, wobei es die Ladestation erlaubt, Werkstücke in den Bereich des Maschinensystem zu verbringen oder aus diesem zu entnehmen.

Im Ausführungsbeispiel weist das Türsystem hierfür ein erstes Türelement 21 und ein zweites Türelement 22 auf, welche entlang des Umfangs des Handarbeitsplatzes verschiebbar an dem Podest 13 angeordnet sind und jeweils einen Umfang von mindestens 180° verschließen. Insbesondere kann das Türsystem und/oder die Handarbeitsstation hierbei so ausgeführt sein, wie dies aus Druckschrift DE 20 2007 016 725 U1 bekannt ist.

Die vorliegende Erfindung kann jedoch auch mit anders aufgebauten Handarbeitsstationen und insbesondere anders aufgebauten Ladestationen eingesetzt werden.

## Patentansprüche

1. Handarbeitsstation für Werkstücke, mit
- einem Handarbeitsplatz,
- einem mittels einer Drehachse drehbaren Drehtisch, welcher am Handarbeitsplatz angeordnet ist, wobei die Drehachse einen Antrieb aufweist,
- einer Steuerung zur Ansteuerung des Antriebs der Drehachse, und
- Bedienelementen zur Bedienung des Handarbeitsplatzes,
**dadurch gekennzeichnet,**
**dass** die Bedienelemente eine erste und eine zweite Bedienanordnung umfassen, welche ortsfest und getrennt voneinander an der Handarbeitsstation angeordnet sind, wobei die Drehachse durch ein Betätigen der ersten Bedienanordnung in eine erste Drehrichtung und durch Betätigen der zweiten Bedienanordnung in eine zweite, entgegengesetzte Drehrichtung gedreht wird.

2. Handarbeitsstation nach Anspruch 1, wobei die erste Bedienanordnung auf einer ersten Seite des Handarbeitsplatzes und die zweite Bedienanordnung auf einer zweiten Seite des Handarbeitsplatzes angeordnet ist, wobei bevorzugt die erste Bedienanordnung auf der linken Seite des Handarbeitsplatzes und die zweite Bedienanordnung auf der rechten Seite des Handarbeitsplatzes angeordnet ist und die Drehachse durch ein Betätigen der ersten Bedienanordnung gegen den Uhrzeigersinn und durch Betätigen der zweiten Bedienanordnung im Uhrzeigersinn gedreht wird.

3. Handarbeitsstation nach Anspruch 1 oder 2, wobei über die erste Bedienanordnung keine Drehbewegung in die zweite Drehrichtung ausgelöst werden kann und über die zweite Bedienanordnung keine Drehbewegung in die erste Drehrichtung ausgelöst werden kann.

4. Handarbeitsstation nach einem der vorangegangenen Ansprüche, mit einer Einhausung für den Handarbeitsplatz.

5. Handarbeitsstation nach einem der vorangegangenen Ansprüche, wobei es sich um eine Ladestation zur Übergabe von Werkstücken an ein Maschinen- und/oder Automationssystem, insbesondere an ein Bearbeitungs-, Transport- und/oder Lagerungssystem, handelt, und wobei es sich bei dem Handarbeitsplatz um einen Ladeplatz zur Übergabe der Werkstücke von einer Ladeseite zu einer Maschinenseite des Ladeplatzes handelt.

6. Handarbeitsstation nach Anspruch 5, mit einem Türsystem zur wahlweisen Abtrennung des Handarbeitsplatzes von der Ladeseite und der Maschinenseite, wobei das Türsystem bevorzugt so ausgeführt ist, dass sich die Maschinenseite erst öffnet, wenn die Ladeseite geschlossen ist und umgekehrt.

7. Handarbeitsstation nach einem der vorangegangenen Ansprüche, wobei jeweils mindestens ein Bedienelement der ersten Bedienanordnung und der zweiten Bedienanordnung in links und rechts des Handarbeitsplatzes und/oder Türsystems angeordneten Einhausungselementen der Ladestation angeordnet ist.

8. Handarbeitsstation nach einem der vorangegangenen Ansprüche, wobei die erste und die zweite Bedienanordnung jeweils eine Zustimmeinrichtung und eine Richtungssteuerung, oder eine Zweihandsteuerung für die Ansteuerung der Drehbewegung der Drehachse aufweisen, wobei bevorzugt die Richtungssteuerung durch einen Hand- oder Fuß-Taster oder einen Hand- oder Fuß-Schalter ausgeführt ist.

9. Handarbeitsstation nach einem der vorangegangenen Ansprüche, wobei die erste und die zweite Bedienanordnung jeweils eine hand-betätigte Zustimmeinrichtung und ein Fuß-Taster als Richtungssteuerung umfassen.

10. Handarbeitsstation nach einem der vorangegangenen Ansprüche, wobei es sich bei dem Handarbeitsplatz um einen Rüstplatz handelt, wobei auf dem Drehtisch bevorzugt eines oder mehrere Werkstücke auf einem oder mehreren Werkstückträgern und/oder Paletten anordenbar sind.

11. Sicherheitsumzäunung mit einer Handarbeitsstation nach einem der vorangegangenen Ansprüche.

12. Maschinensystem mit einer Sicherheitsumzäunung nach Anspruch 11 und/oder einer Handarbeitsstation nach einem der vorangegangenen Ansprüche.

13. Maschinensystem nach Anspruch 12, wobei es sich bei dem Maschinen- und/oder Automationssystem um eine Werkzeugmaschine, eine Roboterzelle, eine Automationszelle und/oder ein Palettenhandlingsystem handelt.
